# EUROPEAN PATENT SPECIFICATION

(11) **EP 3 078 894 B1**
(45) Date of publication and mention of the grant of the patent: **31.10.2018**
(21) Application number: 16164286.3
(22) Date of filing: 07.04.2016
(51) Int. Cl.: F16L 41/00, F16L 41/16, G01L 19/00, G01K 1/14, G01F 15/18, G01D 11/30

(54) **DEVICE FOR POSITIONING A PROBE FOR MEASURING DATA FROM A FLUID INSIDE A CHANNEL AND RELATED METHOD**
VORRICHTUNG ZUR POSITIONIERUNG EINER SONDE ZUR MESSDATEMERFASSUNG AUS EINEM FLUID INNERHALB EINES ROHRES UND ZUGEHÖRIGES VERFAHREN
DISPOSITIF DE POSITIONNEMENT D'UNE SONDE DE MESURE DE DONNÉES À PARTIR D'UN FLUIDE DANS UN CANAL ET PROCEDE ASSOCIE

(30) Priority: 10.04.2015 IT BS20150060
(43) Date of publication of application: 12.10.2016
(73) Proprietor: Teseo S.r.L., 25015 Desenzano del Garda Brescia (IT)
(72) Inventor: GUZZONI, Gianfranco, 25015 Desenzano del Garda, BRESCIA (IT)
(74) Representative: Gualeni, Nadia

(56) References cited:
- EP-A1- 0 414 032
- DE-A1- 2 815 436
- DE-A1- 3 325 309
- DE-A1- 10 352 159
- DE-A1- 19 546 266
- DE-C1- 10 201 335

## Description

This invention relates to a device for the insertion and positioning of a probe for the measuring data in channels of systems for the circulation and distribution of fluids, such as air, compressed or under vacuum, and other gases or liquids.

As is known, in such systems used pipes made of steel or other material, or hollow profiled bars. The bars used for this purpose are generally constituted by an extruded aluminium profile having a central longitudinal bore within which the fluid flows. In such systems, there is a need to measure a series of data (such as flow, temperature and pressure) of the fluid circulating in the channels.

In conventional systems, in order to install a measurement probe, it is necessary to make a specific access hole in the channel and install a sealed tap. In the case of new systems, the access hole and the tap are prepared during installation of the channels. In the case of existing systems, and thus pressurised, it is necessary to use a tool that allows piercing the compressed air distribution line, after emptying the system and consequently shutting down the activity.

The known methods thus provide for the direct insertion of the probe, and in particular of the head portion equipped with measurement sensors, through the tap, and thus inside the channel. The probe is installed and left in position for the time necessary.

DE 28 15 436 A1 discloses a device for positioning a probe through an access hole in a pipe.

This method has several drawbacks.

In particular, the probe is installed projecting from the channel, with obvious risks for the safety of the operators. Although the probe has a rigid body protecting the internal electronic elements, the projecting installation greatly increases the risk of breakage or damage of the probe itself.

Moreover, the installation of the probe occurs substantially blindly, without the possibility of correctly orienting, with respect to the direction of flow of the fluid in the channel, the head of probe inside of which the sensors 46 are housed.

Given the high pressure inside of the channel, there is a particularly high risk of unwanted and uncontrolled release of the probe, which is literally shot out from the fixing fitting. To partially prevent this unwanted effect, safety cables are often used to anchor the probe to the channel. As is apparent, such a solution is not particularly effective and, rather, the presence of the same anchor cables involves risks for the safety of the operators.

The purpose of this invention is to propose a device for the insertion and positioning of a probe for measuring data from a fluid capable of overcoming the limits of the known techniques.

In particular, the purpose of this invention is to propose a device that allows simply and safety inserting and positioning a probe for measuring data from a fluid inside a channel.

This purpose is achieved with a device for inserting and positioning of a probe for measuring data from a fluid according to claim 1, with a method of inserting and positioning of a probe for measuring data of a fluid in a channel according to claim 10. The dependent claims describe preferred embodiments of the invention.

The characteristics and advantages of the device according to the invention will be evident from the following description of several preferred embodiments, provided by way of non-limiting example, with reference to the accompanying figures, in which:
- Figure 1 is an exploded view of a device for inserting and positioning a probe for measuring data from a fluid, according to this invention, in a first embodiment variant;
- Figures 2A and 2B show a sectional view of the device of figure 1, respectively in a first and in a second step of insertion in a channel;
- Figure 3 is an exploded view of a device for inserting and positioning a probe for measuring data from a fluid, according to this invention, in a further embodiment variant;
- Figure 4 shows a sectional view of the device of figure 3, a step of insertion in a channel;
- Figures 5 and 5A show a component of the device of Figure 1 in detail;
- Figures 6 and 6A show a component of the device of Figure 3 in detail;
- Figure 7 shows an embodiment of a probe for measuring data from a fluid suitable to be inserted and positioned by means of a device according to this invention;
- Figure 8 shows a sectional view of a guide according to this invention, in a further embodiment variant.

In said drawings, the reference number 100 indicates a device for inserting and positioning a probe for measuring data from a fluid.

The device 100 is suitable to be inserted, at least partially, inside a channel 70 of a system for the circulation and distribution of fluids, such as air, compressed or under vacuum, or liquids. These channels 70 (for example, round steel pipes or aluminium profiles with quadrilateral or round section) are provided with a longitudinal central bore 71 inside of which the fluid flows in a direction Y.

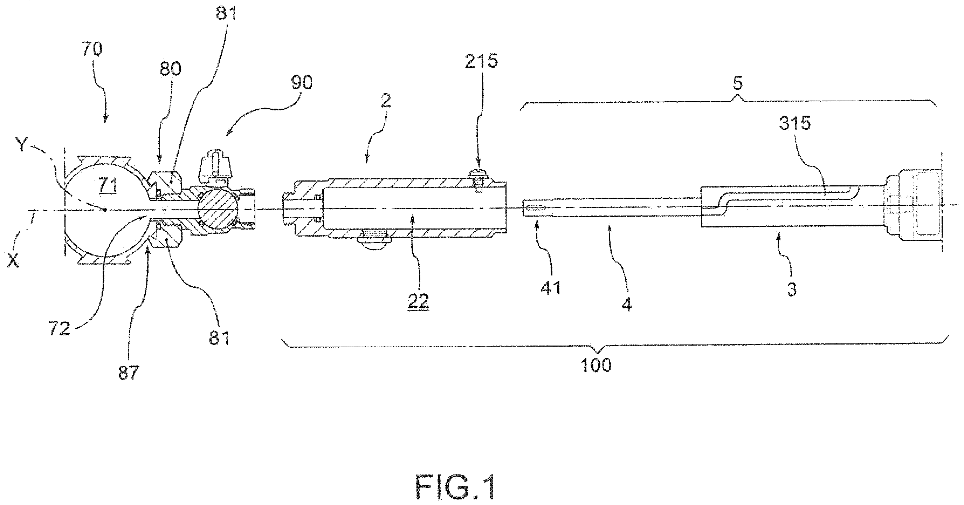

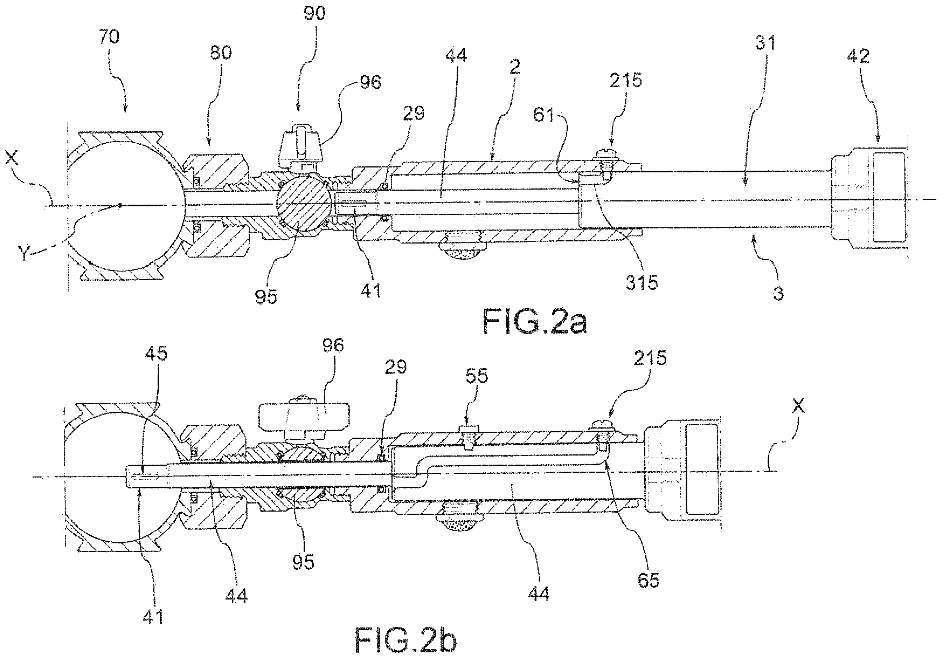

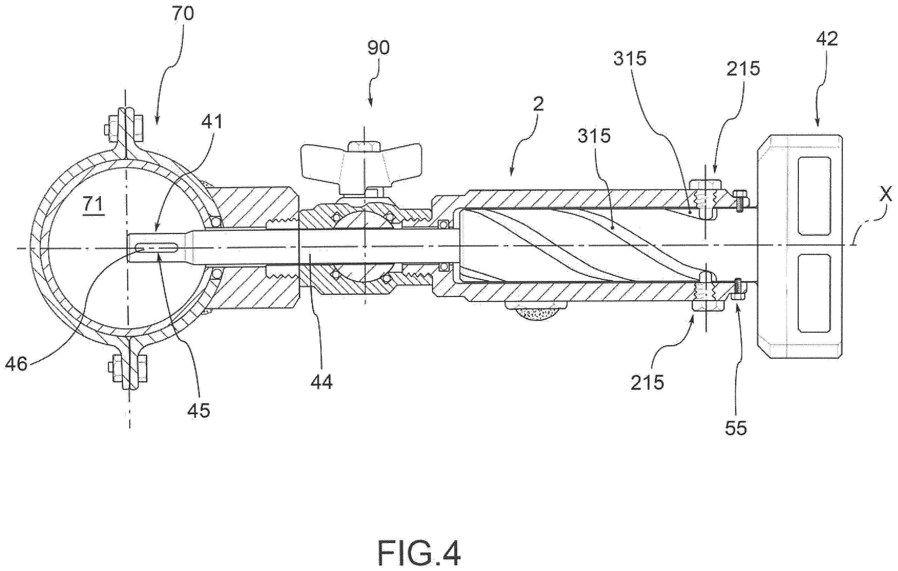

These channels 70 are equipped, in the installation step of the system or afterwards, with an access door 72 to the central bore in which flows the fluid (whose data is to be measured) and shut-off means of the fluid actuatable between a sealed closing configuration of the access to the channel 70 (Figures 1, 2A and 3) and an open configuration of access to the channel 70 (Figures 2B and 4).

The access port 72 defines an insertion axis of the device 100 for measuring data, defined as insertion axis X, substantially orthogonal to the direction Y of the flow.

Preferably, as shown in Figure 1, the shut-off means of the fluid comprise a tap 90, sealingly fixed to the channel 70 via a fitting 80. The fitting 80 is equipped with a central hole 82 for the connection with the access door 72 to the central bore 71 of the channel 70.

In an embodiment variant, wherein the channel 70 is a normal pipe of circular section, the fitting 80 is fixed on one side to the channel 70 by welding, and is provided, on the opposite side, with a threaded inlet to make the sealed connection with the tap 90.

In a further embodiment variant wherein the channel 70 is provided with suitable throats 87 (shown in Figure 1), the fitting 80 is constituted by a pair of clamps 81 suitable to be tightened on the channel 70, each operating on a throat 87 (throat that defines a dovetail coupling), and joined by means of at least one tightening screw suitable, after its rotation, to tighten the upper clamp and the lower clamp on the respective throats bringing them mutually closer to each other and fixing them to the channel 70. Preferably, the fitting 80 is provided with a threaded inlet 83 (for example, female) to realise the sealed connection with the tap 90.

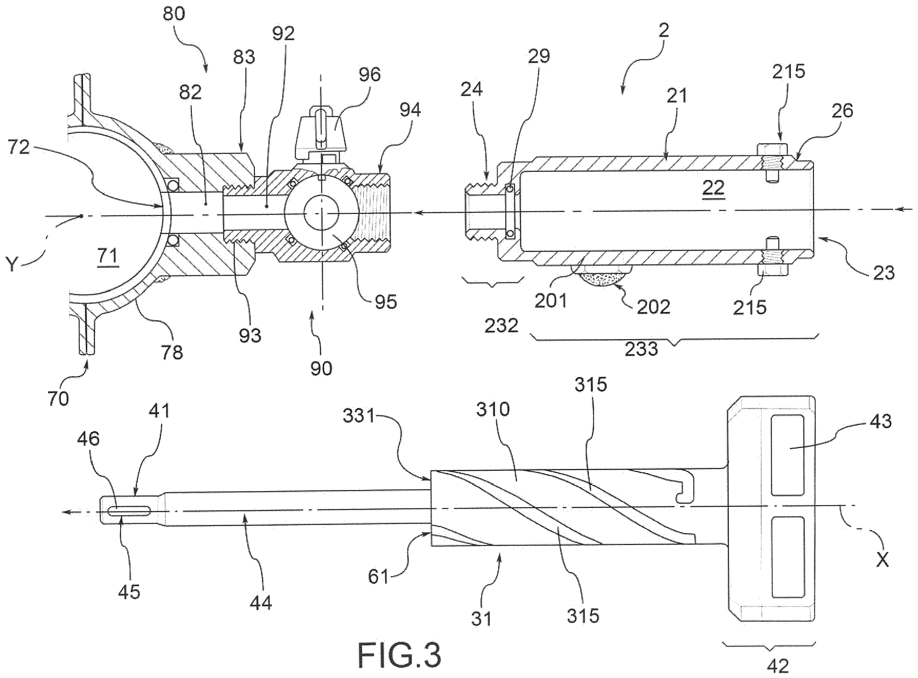

In a further embodiment variant wherein the channel 70 is a normal pipe of circular section (shown in Figure 3), the channel 70 is fitted a collar 78 formed by two semicircles suitable to be tightened on the channel 70 by means of at least one tightening screw. The collar 78 is equipped with a central hole for the connection with the access door 72 to the central bore 71 of the channel. In a first version (shown in Figure 3), the collar 78 joins, with welding, the fitting 80 and thus the tap 90.

As shown in Figures 1 and 3, the tap 90 is provided with a threaded end 93 (for example, male) suitable to engage with the respective threaded end 83 of the fitting 80. The tap 90 is provided with a further threaded end 94 (for example, female).

The tap 90 comprises a central hole 92 for the connection with the access door 72 to the central bore 71 of the channel 70.

Preferably, the tap 90 includes a ball valve 95 suitable to close and open the central hole 92 of the tap 90, and then to open and close access to the central bore 71 of the channel 70. The ball valve 95 is actuatable by the rotation of a lever or knob 96 between the closed configuration (Figures 1, 2A and 3) and the open configuration (Figures 2B and 4).

The device 100 for inserting and positioning a probe for measuring data from a fluid extends mainly along a longitudinal device axis coincident, in the step of coupling with the shut-off means 90, with the insertion axis X.

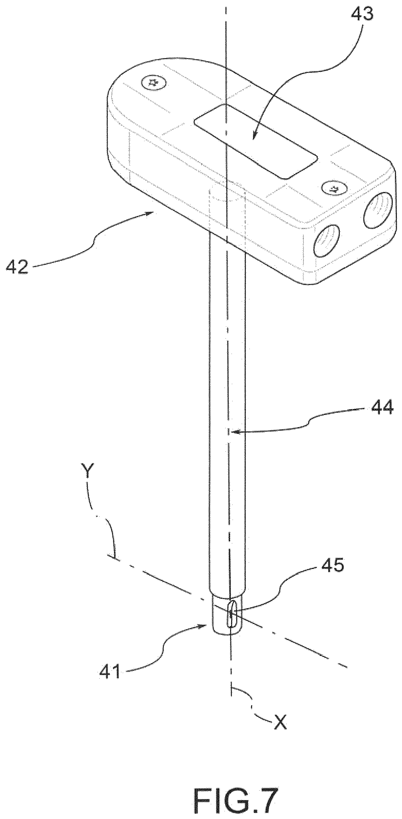

As shown in Figures 1 and 3, the device 100 comprises a guide 2 inside which is insertable and axially translatable a probe-holder 3 suitable to house a probe 4 (shown for example in Figure 7). The guide 2 and the probe-holder 3 are engaged with each other by coupling means suitable to lock the axial sliding of the probe-holder 3 inside the guide 2.

The guide 2 is suitable to be coupled to the shut-off means of the fluid (and, in particular, to the tap 90) so as to realise a passage coaxial to the access door 72 to the channel 70.

The guide 2 comprises a body 21, substantially cylindrical, and provided with a central hole 22. The body 21 comprises a first threaded end 24 (for example, male) suitable to engage with the threaded end 94 of the tap 90. The guide 2 is thus sealingly engageable, by means of the end 24, with the tap 90 in such a way that, in the open configuration, the central hole 22 is in communication with the bore 71 of the channel 70.

The guide 2 comprises an opposite end 26 provided with an access opening 23 to the central hole 22 for inserting, along the axis X, the probe-holder 3. In fact, the guide 2 is suitable to guide the probe holder 3 during the step of insertion in the channel 70.

Preferably, the body 21 of the guide 2 is provided with a drainage hole 201, transverse with respect to the axis X, suitable to relieve the thrust pressure of the pressurised gas during the extraction step of the probe-holder 3. Preferably, the drainage hole 201 is fitted with a silencer 202 adapted to attenuate the whistle due to the exit of the compressed gas.

Preferably, the inner hole 22 has a first diameter, in correspondence of a front portion 232, substantially corresponding to the outer diameter of the body 44 of the probe 4 so as to guide its movement. Preferably, the inner hole 22 has a second diameter, in correspondence of a rear portion 233, substantially corresponding to the outer diameter of the body 31 of the probe-holder 3 so as to guide its movement.

Preferably, the guide 2 comprises, in correspondence of the front portion 232 a gasket 29, for example an O-ring, suitable to engage with the body 44 of the probe 4 to sealing close the inner hole 22 of the guide 2.

As shown in Figures 1 and 3, the probe-holder 3 comprises a body 31, internally hollow, inside which is housed, at least partially, the probe 4. The body 31, once inserted in position in the guide 2, allows the correct positioning of the head 41 inside the central bore 71, and in particular in the lumen of the flow that flows in the channel 70.

Figure 7 shows an embodiment of a probe 4 for measuring data from a fluid suitable to be inserted and positioned by means of a device 100 according to this invention. The probe 4 comprises a body 44, inside which are housed the data transport cables, provided, at one end, with a measuring head 41 and, at the opposite end, with a base 42 or box containing the electronic components (and in particular the electronic equipment for measuring, processing and storing the data measured from the fluid) and preferably equipped with a display 43 for the display and the instantaneous read-out of the data measured.

The head 41 is provided with a plurality of sensors for measuring, for example, the pressure, flow rate, speed, temperature, humidity, dew point and other parameters of a gas or other fluid that flows inside the channel or pipe 70. In particular, the head 41 is provided with a slot 45, which defines a transverse passage (along the axis Y) inside of which is housed at least one sensor 46. The correct positioning of the probe 4 in the channel 70 (shown for example in Figure 4) it requires that the head 41 be oriented so that the slot 46 (and the transverse passage) are positioned along the flowing axis Y of the fluid.

Preferably, the probe 4 is fixed (for example by screws) inside the body 31 of the probe holder 3 in such a way that it cannot be extracted from it. The body 31, with the probe 4 fixed, constitutes a probe unit 5.

The coupling means 215,315 are suitable to control and lock the axial sliding of the probe-holder 3 inside the guide 2, in particular in the open configuration of the fluid shut-off means, wherein the fluid pressure pushes the probe-holder 3 in direction opposite to the direction of insertion.

The coupling means comprise at least one groove 315 provided on the probe-holder 3 and at least one pin 215 provided on the guide 2. The relative engagement between the groove 315 and the pin 215 allows guiding, in a controlled manner, the insertion and positioning of the probe-holder 3 in the channel 70. The groove 315 therefore acts as a track for guiding the movement of the probe-holder 3 relative to the guide 2. Furthermore, the relative engagement between the groove 315 and the pin 215 allows realising a "bayonet" lock between the guide 2 and the probe-holder 3.

In a variant not shown, the groove 315 is provided inside the guide 2 and the pin 215 is provided on the probe-holder 3.

As shown in Figures 1 and 3, the outer surface 310 of the body 31 is provided with at least one groove 315 suitable to be engaged by a specific pin 215 provided on the guide 2. The guide 2 is provided with at least one pin 215 protruding inside the hole 22 precisely suitable to be inserted in the groove 315. The groove 315 extends from the front edge 331 of the body 31.

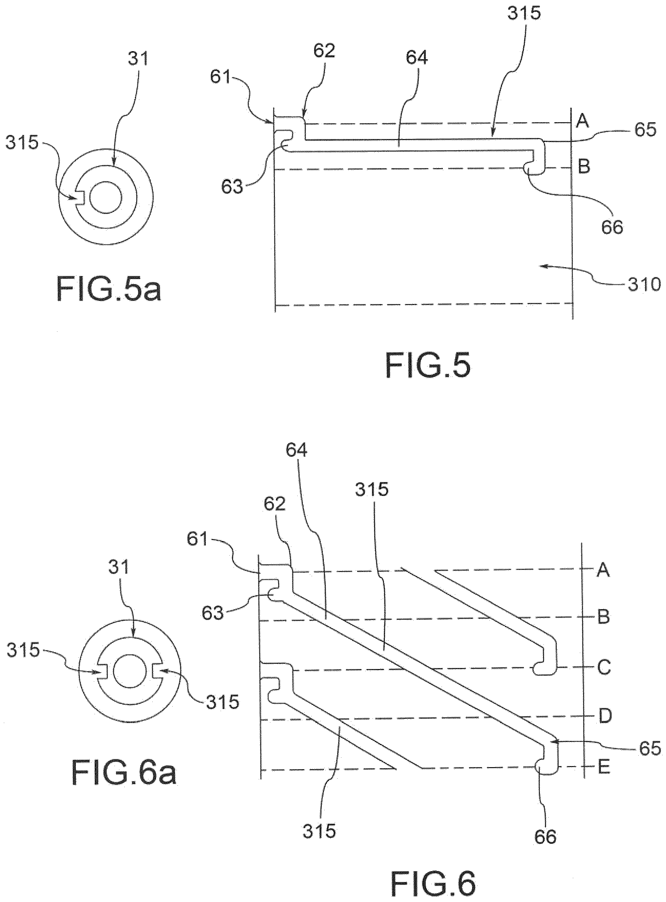

In the embodiment variant shown in Figures 1 and 5, the body 31 is provided with a groove 315 that extends in a rectilinearly substantially parallel to the axis of the device. In this variant, the guide 2 is provided with a pin 215 protruding inside the hole 22, suitable to engage the groove 315.

In the embodiment variant shown in Figures 3 and 6, the body 31 is provided with pair of grooves 315. In this variant, the guide 2 is provided with a pair of pins 215 protruding inside the hole 22, each suitable to engage the respective groove 315.

In a variant, the groove 315 extends substantially like a coil about the axis of the device. Preferably, each groove 315 extends in a coil as far as to make one complete turn (360°) around the axis of the device, or more than one complete turn. In the embodiment variant shown in Figures 3 and 6, the groove 315 extends in a coil as far as to make at least one complete turn around the axis of the device.

Each groove defines an entry point 61, a first abutment point 62, a first lock 63 (which defines a bayonet attachment), an advancement portion 64, a second abutment point 65 and a second lock 66 (which defines a bayonet attachment).

With particular reference to Figures 5 and 6, there is shown, in particular, the development in plane of the surface 310 of the body 31 on which the groove 315 is realised. In particular, several reference points are shown corresponding to different degrees of rotation of probe-holder 3 with respect to the axis X, and in particular the points: A = 0°, B = 90°, C = 180°, D = 270°, E = 360° and thus a complete turn around the axis X.

In the embodiment variant of Figure 5, for the single groove 135: the entry point 61 and the first abutment point 62 are in the 0° position, the first lock 63 is in correspondence of 45° of rotation, the advancement portion 64 extends rectilinearly parallel to the axis of the device and therefore also the second abutment point 65 is in correspondence of 45° of rotation, and the second lock 66 is in correspondence of 90° of rotation.

As shown in Figure 6A, the entry points 61 of each groove 315 are spaced apart by 180°. The presence of a pair of grooves 315, arranged symmetrically with respect to the axis of the device, allows orienting the position of the head 41 and thus of the slot 45 with respect to the flowing direction of the fluid, so as to make measurements along the direction of the flow or in the opposite direction.

In the embodiment variant of Figure 6, for the single groove 135: the entry point 61 and the first abutment point 62 are in the 0° position, the first lock 63 is in correspondence of 45° of rotation, the advancement portion 64 extends in a helicoid along the axis X and thus the second abutment point 65 is in correspondence of 315° of rotation, and the second lock 66 is in correspondence of 360° of rotation. For the second groove 135: the entry point 61 and the first abutment point 62 are in the 180° position, the first lock 63 is in correspondence of 225° of rotation, the advancement portion 64 extends in a helicoid along the axis X and thus the second abutment point 65 is in correspondence of 135° (or 495°) of rotation, and the second lock 66 is in correspondence of 180° (or 540°) of rotation.

Preferably, as shown in Figure 4, once the probe 4 is inserted in position in the channel 70, the probe-holder 3 can be fixed inside the guide 2 by means of a safety locking means 55, for example a special screw actuatable by means of a specific wrench so as to avoid tampering or disassembly of the probe by non-authorised personnel.

During use, the probe-holder 3 is slidingly positioned inside the guide 2 through coupling means represented by the groove 315 and the pins 215. In normal conditions of use, the probe-holder 3 is held in the locking position 66 of the groove 315 by the thrust (along the axis X in the direction of the opening 23 and thus in the direction of extraction of the probe-holder 3) of pressure exerted by the fluid in the channel 70. Such thrust of the fluid locks the probe-holder 3 in the locking position 66.

For maintenance reasons, it may be necessary to empty the channel 70. Such emptying results in the loss of fluid pressure. In such a situation, the probe-holder 3, no longer held in the safety locking position 66 by the thrust of the fluid, could come out from the second locking point 66 and rise along the groove 135 to the second abutment point 65. In case of restoration of the fluid in the channel 70, the probe-holder 3 (no longer in the safety locking position 66) risks being violently ejected by the thrust of the fluid, with consequent risks for the safety of the operators.

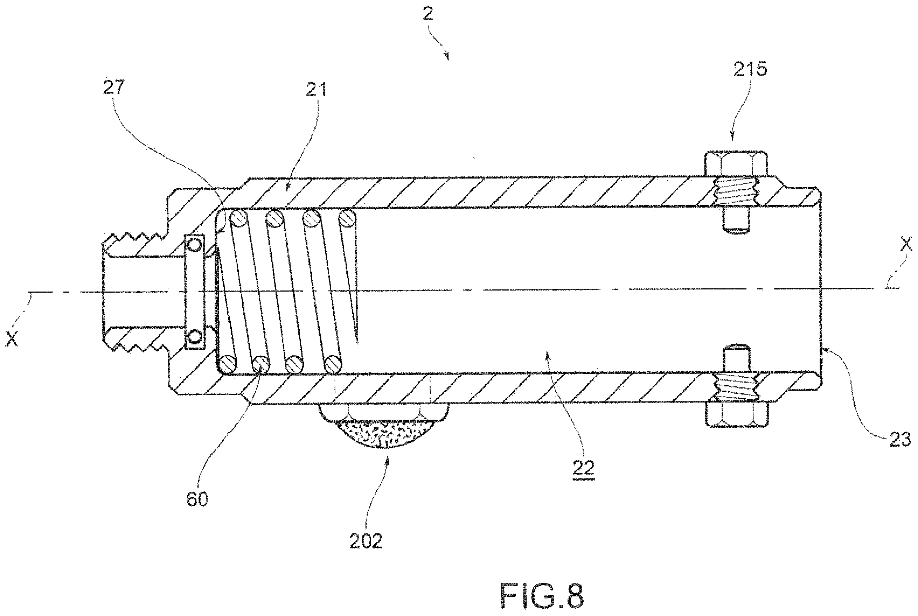

To resolve this problem, in the embodiment variant shown in Figure 8, the guide 2 is provided inside it with a thrust element 60 suitable to provide the probe-holder 3 probe (when inserted in the guide 2) a thrust along the axis X in the direction of the opening 23 (thus in the direction of extraction of the probe-holder 3).

For example, the thrust element 60 is a spring positioned in the inner hole 22 of the guide 2, in abutment against the bottom 27. When the probe-holder 3 is inserted in the guide 2, the spring abuts against the front edge 331 of the body 31 of the probe-holder 3.

Therefore, even in the event of emptying of the channel 70, the thrust element 60 inside the guide 2 provides the thrust for locking the probe-holder 3 in the safety locking position 66, without risk of coming out from the second locking point 66 and expulsion when the channel is restored.

During use, as shown in Figures 1 and 3, on the channel 70 are mounted the fluid shut-off means, for example the tap 90, along the axis X, in correspondence of the access door 72 to the central bore 71. The fluid shut-off means are in the closed configuration.

The first step involves installation of the guide 2 on the tap 90, for example by screwing the respective ends 24,94.

At this point, the probe-holder 3, inside which is fixed the probe 4 (and thus the probe unit 5), can be inserted (along the direction of insertion) inside the hole 22 of the guide 2 in such a way that the pin 215 of the guide 2 engages the groove 315, in particular through the entry point 61.

The probe-holder 3 is further inserted (along the direction of insertion) in the guide 2 until the pin 215 comes into abutment against the first abutment point 62: thus a sealing stop configuration is reached (as shown in Figure 2A) in which the inner hole 22 of the guide 2 is sealing closed through the relative engagement between the gasket 29 and the body 44 of the probe 4.

In order to further insert the probe-holder 3 in the guide 2, it is necessary to rotate the probe-holder (preferably in the clockwise direction) until reaching a first locking configuration in which the pin 215 is in correspondence of the lock 63 and realises a "bayonet" attachment.

In the first locking configuration, it is possible to rotate the tap 90 in the open configuration: the fluid pressure in the channel 70 flows along the inner duct 92 of the tap 90 and pushes the probe-holder 3 towards the outside of the guide 2 (and thus in the opposite direction to the direction of insertion). The pressurised fluid does not flows out into the duct 22 thanks to the seal provided by the gasket 29. If part of the fluid should still bypass the gasket 29 and reaches the duct 22, the drainage hole 201 relieves the thrust pressure of the pressurised gas and the silencer 202 muffles the whistling noise due to the escape of the compressed gas. The "bayonet" attachment defined between the pin 215 and the groove 315 (in correspondence of the lock 63) prevents the uncontrolled and undesired backing up of the probe-holder 3, which remains in position in the guide 2.

At this point it is possible to further insert the probe-holder 3 in the guide 2, exerting sufficient pressure to overcome the thrust pressure of the fluid, so that the pin 215 slides along the groove 315 in correspondence of the advancement portion 64. Advantageously, the presence of an advancement portion 64, which extends like a helicoid along the axis X, reduces the effort required to overcome the thrust pressure of the fluid. In particular, the presence of an advancement portion 64, which extends like a coil along the axis X, is an effective system for reducing the thrust pressure in the step of introducing the probe. Furthermore, the case in which the groove 315 extends like a coil to make a complete rotation (360 °) about the axis X, is particularly facilitated. Even the presence of a pair of grooves 315, spaced by 180°, facilitates the advancement of the probe-holder.

The probe-holder 3 is advanced in the guide 2 until the pin 215 comes into abutment against the second abutment point 65. In order to fix probe-holder 3 in position in the guide 2, it is necessary to rotate the probe-holder (preferably in the clockwise direction) until reaching a second locking configuration in which the pin 215 is in correspondence of the lock 66 and realises a "bayonet" attachment. The "bayonet" attachment defined between the pin 215 and the groove 315 (in correspondence of the lock 66) prevents the uncontrolled and undesired backing up of the probe-holder 3, which remains in position in the guide 2.

So, in summary, the operations necessary to insert the probe-holder 3, equipped with probe 4, in the guide 2, and thus in the channel 70, it is necessary to: insert the probe-holder 3 in the guide 2 up to the first abutment point 62, actuate the bayonet attachment to make it enter the first locking configuration (in correspondence of the lock 63), open the tap 90, advance the probe-holder 3 (in correspondence of the portion 64) until the second abutment point 65 and actuate the bayonet attachment to enter the second locking configuration (in correspondence of the lock 66).

To remove the probe-holder 3, equipped with probe 4, from the guide 2 and thus from the channel 70, is necessary to repeat the same operations above in the reverse order: disengage the bayonet attachment to exit from the second locking configuration (in correspondence of the lock 66), retract the probe-holder 3 (in correspondence of portion 64) to return to the first locking configuration (in correspondence of the lock 63), close the tap 90, disengage the bayonet attachment to exit from the first locking configuration and completely remove the probe-holder 3.

This invention also covers a probe unit 5, comprising a probe-holder 3 inside of which a probe 4 is fixed, preferably in a non-releasable manner.

In particular, the profile of the groove 315 allows obtaining various insertion steps of the probe unit in the channel 70, in particular:
1st partial introduction (as visible in Figure 2A) in which the head 41 is in the vicinity of the ball valve 95 of the tap 90 (in closed configuration) without going in abutment against said valve ball 95, thus avoiding damage of the sensors;
2nd stop with pneumatic seal (as visible in Figure 2A) in which the body 44 of the probe 4, creates a seal with the gasket 29;
3rd opening of the valve, in which the "bayonet" system prevents the uncontrolled and undesired backing up of the probe-holder 3, which remains in position in the guide 2;
4th introduction to the end of travel of the probe unit (as visible in Figure 2B) in which the head 41 is positioned inside the central bore 71, and in particular in the lumen of the fluid that flows in the channel 70;
5th locking the probe unit in the correct measurement position, in which the "bayonet" system prevents the uncontrolled and undesired backing up of the probe-holder 3, which remains in position in the guide 2.

This invention also covers a method of inserting and positioning a probe 4 for measuring data from a fluid inside a channel 70 by means of a device 100, comprising the steps of:
- providing a channel 70 fitted with shut-off means 90 of the fluid in the closed configuration;
- engaging the guide 2 on the shut-off means 90;
- inserting the probe-holder 3, inside which the probe 4 is fixed in the guide 2 so as to activate the coupling means 315,215 between the probe- holder 3 and the guide 2;
- actuating the shut-off means 90 in the open configuration;
- further inserting the probe-holder 3 inside the guide 2 in the insertion direction, so that the head 41 of the probe is positioned in the through lumen of the fluid in the channel 70;
- activating the coupling means 213,315 in a locking configuration so as to prevent the axial sliding of the probe-holder 3 in the guide 2.

The method provides, between the step of inserting the probe-holder 3 in the guide 2 and the step of actuating the shut-off means 90 in the open configuration, the step of activating the coupling means 213,315 in a further locking configuration so as to prevent the axial sliding of the probe-holder 3 in the guide 2 in the opposite direction to that of insertion.

This invention also covers a also a kit comprising a device 100 wherein a probe 4, and shut-off means of the fluid comprising a tap 90 and a fitting 80 as described above.

Innovatively, a device according to this invention allows simply and safety inserting and positioning a probe for measuring data from a fluid inside a channel.

Advantageously, a device according to this invention allows placing, removing and replacing the measurement probe without having to depressurise the system of the pressurised fluid, and thus to perform the operations of mounting and dismounting the probe even in the presence of pressure inside the pipes.

Advantageously, a device according to this invention allows rigidly and securely supporting the probe and the measurement sensor.

Advantageously, a device according to this invention meets essential safety requirements, particularly in the step of extracting the probe with the channel pressurised, since it prevents the undesired and uncontrolled exit of the probe (in particular thanks to the "bayonet" system for moving, positioning and fixing the probe in the pipe using a special shaped groove).

Advantageously, a device according to this invention allows easily and safety extracting the measurement probe to perform the necessary periodic calibrations. Moreover, in the case of rented measurement probes, you can disconnect and remove the probe from the device and close the access to the channel.

Advantageously, a device according to this invention can be positioned on various types of channels, of various size and shape, on systems not yet installed or on existing systems, and it can be positioned on the channel to measure the flow from both right to left and vice versa.

Advantageously, a device according to this invention allows using a single sensor-holder head for measuring pressure, flow rate, speed, temperature and other parameters of a gas or other fluid that flows inside the channel or pipe.

Advantageously, a device according to this invention allows a tight seal of the pressurised fluid during its operation. Advantageously, a device according to this invention avoids tampering by unauthorised persons, thanks to a safety locking means.

To the forms of embodiment of the device according to the invention, a technician in the field, to satisfy contingent requirements, may make modifications, adaptations and replacements of members with others functionally equivalent, without departing from the scope of the following claims.

## Claims

1. Device (100) for inserting and positioning a probe (4) for measuring data from a fluid inside a channel (70), said probe (4) being provided with a body (44) provided with a head (41) containing at least one sensor and said channel (70) being provided with an access door (72) which defines an insertion axis (X) for the insertion of the head (41) and being associated with shut-off means (90) of the fluid operable between a closed configuration sealing the access to the channel (70) and an open configuration for access to the channel (70), said device (100), comprising:
- a guide (2), hollow inside, suitable to be coupled to the shut-off means (90) so as to realise a passage coaxial to the access door (72);
- a probe-holder (3) provided with a hollow body (31) suitable to contain the probe (4) at least partially, said body (31) being engageable inside the guide (2) in such a way as to permit the insertion of the head (41) in the right position in the lumen of the flow flowing in the channel (70);
- coupling means (215, 315) of the guide (2) and the probe-holder (3) suitable to guide the axial sliding of the probe-holder (3) in the guide (2) and to axially block the probe-holder (3) in the guide (2) in the open configuration to withstand the pressure of the fluid; **characterized in that** the coupling means comprise at least one groove (315), made on the outer surface (310) of the body (31) of the probe-holder (3), and at least one pin (215) engageable and sliding in the groove (315), projecting inside the body (21) of the guide (2), or vice versa,
and **in that** the device (100) extends mainly along a longitudinal axis of the device coincident, during coupling with the shut-off means (90), with the insertion axis (X), and wherein the groove (315) extends substantially in a helicoid around the axis (X).

2. Device (100) according to claim 1, wherein the groove (315) extends in a helicoid as far as to make at least one complete turn around the axis of the device.

3. Device (100) according to claim 1 or 2, comprising a pair of grooves (315) and a pair of pins (215), each suitable to engage the respective groove (315).

4. Device (100) according to claim 3, wherein the entry points (61) of each groove (315) are spaced apart by 180° around the axis of the device.

5. Device (100) according to any of the preceding claims, wherein the coupling means (315,215) form at least a further lock (66) between the guide (2) and the probe-holder (3) in a an end of travel configuration in which the head (41) of the probe (4) is positioned in the lumen of the flow flowing in the channel (70) and wherein the coupling means (315,215) form a further lock (63) between the guide (2) and the probe-holder (3) in a configuration of partial introduction of the probe-holder (3) in the guide (2) wherein the head (41) of the probe (4) is near the fluid shut-off means (90).

6. Device (100) according to any of the preceding claims, wherein the guide (2) is provided with a drainage hole (201) with silencer (202).

7. Device (100) according to any of the preceding claims, wherein the probe-holder (3) can be fixed inside the guide (2) by safety locking means (55) such as a special screw which can be operated only using a special wrench.

8. Device (100) according to any of the preceding claims, wherein the guide (2) is equipped with a thrust element (60) suitable to give the probe-holder (3), inserted in the guide (2), a thrust along an insertion axis (X) in an extraction direction of the probe-holder (3), wherein the thrust element (60) is a spring positioned inside the guide (2).

9. Device (100) according to any of the preceding claims, comprising a probe (4) for measuring data from a fluid, said probe (4) being provided with a body (44) provided with a head (41) containing at least one sensor and being attached inside the body (31) of the probe-holder (3).

10. Method of inserting and positioning a probe (4) for measuring data from a fluid inside a channel (70) by means of a device (100) according to claim 9, comprising the steps of:
- providing a channel (70) fitted with shut-off means (90) of the fluid in the closed configuration;
- engaging the guide (2) on the shut-off means (90);
- inserting the probe-holder (3), inside which the probe (4) is fixed, in the guide (2) so as to activate the coupling means (315,215) between the probe-holder (3) and the guide (2);
- actuating the shut-off means (90) in the open configuration;
- further inserting the probe-holder (3) in the guide (2) in the insertion direction, so that the head (41) of the probe is positioned in the lumen of the fluid flowing in the channel (70);
- activating the coupling means (213,315) in a locking configuration so as to prevent the axial sliding of the probe-holder (3) in the guide (2).

11. Method according to claim 10, wherein between the step of inserting the probe-holder (3) in the guide (2) and the step of actuating the shut-off means (90) in the open configuration, the step of activating the coupling means (213,315) in a further locking configuration is provided for so as to prevent the axial sliding of the probe-holder (3) in the guide (2) in the opposite direction to that of insertion.

## Patentansprüche

1. Vorrichtung (100) zum Einführen und Positionieren einer Sonde (4) zum Messen von Daten von einem Fluid in einem Kanal (70), wobei die Sonde (4) mit einem Körper (44) vorgesehen ist, der mit einem Kopf (41), der mindestens einen Sensor beinhaltet, vorgesehen ist, und wobei der Kanal (70) mit einer Zugangsöffnung (72) vorgesehen ist, die eine Einführachse (X) für das Einführen des Kopfes (41) bestimmt, und mit Absperrmitteln (90) des Fluids in Zusammenhang gebracht ist, die zwischen einer geschlossenen Ausgestaltung, die den Zugang zu dem Kanal (70) versiegelt, und einer offenen Ausgestaltung für einen Zugang zu dem Kanal (70) betreibbar sind, wobei die Vorrichtung (100) Folgendes umfasst:
- eine Führung (2), die innen hohl ist und die geeignet ist, mit den Absperrmitteln (90) gekoppelt zu werden, um so eine Durchgang koaxial zu der Zugangsöffnung (72) zu realisieren;
- einen Sondenhalter (3), der mit einem hohlen Körper (31) vorgesehen ist, der geeignet ist, die Sonde (4) zumindest teilweise zu beinhalten, wobei der Körper (31) in der Lage ist, in die Führung (2) einzugreifen, sodass das Einführen des Kopfes (41) in der richtigen Position in dem Lumen der Strömung, die in dem Kanal (70) fließt, ermöglicht ist;
- Kopplungsmittel (215, 315) der Führung (2) und des Sondenhalters (3), die geeignet sind, das axiale Gleiten des Sondenhalters (3) in der Führung (2) zu führen und den Sondenhalter (3) in der Führung (2) in der offenen Ausgestaltung axial zu blockieren, um dem Druck des Fluids zu widerstehen;
**dadurch gekennzeichnet, dass** die Kopplungsmittel mindestens eine Nut (315), die auf der äußeren Oberfläche (310) des Körpers (31) des Sondenhalters (3) eingebracht sind, und mindestens einen Stift (215), der in die Nut (315) eingreifen kann und darin gleitet, und der in den Körper (21) der Führung (2) hineinragt, oder umgekehrt, umfassen,
und dadurch, dass die Vorrichtung (100) sich während des Koppelns mit den Absperrmitteln (90) im Wesentlichen entlang einer Längsachse der Vorrichtung, die deckungsgleich mit der Einführachse (X) ist, erstreckt, und wobei sich die Nut (315) im Wesentlichen in einer Schraubenlinie um die Achse (X) erstreckt.

2. Vorrichtung (100) nach Anspruch 1, wobei sich die Nut (315) in einer Schraubenlinie so weit erstreckt, dass sie mindestens eine volle Umrundung um die Achse der Vorrichtung ausführt.

3. Vorrichtung (100) nach Anspruch 1 oder 2, umfassend ein Paar von Nuten (315) und ein Paar von Stiften (215), die jeweils geeignet sind, in die jeweilige Nut (315) einzugreifen.

4. Vorrichtung (100) nach Anspruch 3, wobei die Eintrittspunkte (61) jeder Nut (315) um 180° um die Achse der Vorrichtung beabstandet sind.

5. Vorrichtung (100) nach einem der vorhergehenden Ansprüche, wobei die Kopplungsmittel (315, 215) mindestens eine weitere Verriegelung (66) zwischen der Führung (2) und dem Sondenhalter (3) in einer Endlagenausgestaltung bilden, in der der Kopf (41) der Sonde (4) in dem Lumen der Strömung, die in dem Kanal (70) fließt, positioniert ist, und wobei die Kopplungsmittel (315, 215) eine weitere Verriegelung (63) zwischen der Führung (2) und dem Sondenhalter (3) in einer Ausgestaltung einer teilweisen Einführung des Sondenhalters (3) in die Führung (2) bilden, wobei der Kopf (41) der Sonde (4) nahe der Fluid-Absperrmittel (90) ist.

6. Vorrichtung (100) nach einem der vorhergehenden Ansprüche, wobei die Führung (2) mit einem Abflussloch (201) mit Schalldämpfer (202) vorgesehen ist.

7. Vorrichtung (100) nach einem der vorhergehenden Ansprüche, wobei der Sondenhalter (3) in der Führung (2) mittels Sicherheitsverriegelungsmitteln (55) wie einer besonderen Schraube, die nur unter Verwendung eines besonderen Schraubenschlüssels betrieben werden kann, fixiert sein kann.

8. Vorrichtung (100) nach einem der vorhergehenden Ansprüche, wobei die Führung (2) mit einem Schubelement (60) ausgerüstet ist, das geeignet ist, dem Sondenhalter (3), der in die Führung (2) eingeführt ist, einen Schub entlang einer Einführachse (X) in einer Extraktionsrichtung des Sondenhalters (3) zu geben, wobei das Schubelement (60) eine Feder ist, die in der Führung (2) positioniert ist.

9. Vorrichtung (100) nach einem der vorhergehenden Ansprüche, umfassend eine Sonde (4) zum Messen von Daten von einem Fluid, wobei die Sonde (4) mit einem Körper (44) vorgesehen ist, der mit einem Kopf (41), der mindestens einen Sensor beinhaltet, vorgesehen ist, und der in dem Körper (31) des Sondenhalters (3) befestigt ist.

10. Verfahren zum Einführen und Positionieren einer Sonde (4) zum Messen von Daten von einem Fluid in einem Kanal (70) mittels einer Vorrichtung (100) nach Anspruch 9, umfassend folgende Schritte:
- Bereitstellen eines Kanals (70), der mit Absperrmitteln (90) des Fluids in der geschlossenen Ausgestaltung ausgestattet ist;
- Ineingriffbringen der Führung (2) an den Absperrmitteln (90);
- Einführen des Sondenhalters (3), in dem die Sonde (4) fixiert ist, in die Führung (2), um die Kopplungsmittel (315, 215) zwischen dem Sondenhalter (3) und der Führung (2) zu aktivieren;
- Betätigen der Absperrmittel (90) in der offenen Ausgestaltung;
- Weiteres Einführen des Sondenhalters (3) in die Führung (2) in der Einführrichtung, sodass der Kopf (41) der Sonde in dem Lumen des Fluids, das in dem Kanal (70) strömt, positioniert ist;
- Aktivieren der Kopplungsmittel (213, 315) in einer verriegelnden Ausgestaltung, um das axiale Gleiten des Sondenhalters (3) in der Führung (2) zu verhindern.

11. Verfahren nach Anspruch 10, wobei zwischen dem Schritt des Einführens des Sondenhalters (3) in die Führung (2) und dem Schritt des Betätigens der Absperrmittel (90) in der offenen Ausgestaltung der Schritt des Aktivierens der Kopplungsmittel (213, 315) in einer weiteren verriegelnden Ausgestaltung vorgesehen ist, um so das axiale Gleiten des Sondenhalters (3) in der Führung (2) in der dem Einführen entgegengesetzten Richtung zu verhindern.

## Revendications

1. Dispositif (100) d'insertion et de positionnement d'une sonde (4) de mesure de données à partir d'un fluide à l'intérieur d'un canal (70), ladite sonde (4) étant dotée d'un corps (44) pourvu d'une tête (41) contenant au moins un capteur et ledit canal (70) étant doté d'une porte d'accès (72) qui définit un axe d'insertion (X) pour l'insertion de la tête (41) et étant associé à des moyens d'obturation (90) du fluide actionnables entre une configuration fermée scellant l'accès au canal (70) et une configuration ouverte pour l'accès au canal (70), ledit dispositif (100), comprenant :
- un guide (2), creux à l'intérieur, adapté pour être couplé aux moyens d'obturation (90) de façon à réaliser un passage coaxialement à la porte d'accès (72) ;
- un support de sonde (3) doté d'un corps creux (31) adapté pour contenir la sonde (4) au moins partiellement, ledit corps (31) pouvant entrer en prise à l'intérieur du guide (2) de telle manière à permettre l'insertion de la tête (41) dans la bonne position dans la lumière du flux s'écoulant dans le canal (70) ;
- des moyens de couplage (215, 315) du guide (2) et du support de sonde (3) adaptés pour guider le coulissement axial du support de sonde (3) dans le guide (2) et pour bloquer axialement le support de sonde (3) dans le guide dans la configuration ouverte pour résister à la pression du fluide ;
**caractérisé en ce que** les moyens de couplage comprennent au moins une rainure (315), réalisée sur la surface extérieure (310) du corps (31) du support de sonde (3), et au moins une broche (215) pouvant être mise en prise et coulissante dans la rainure (315), faisant saillie à l'intérieur du corps (21) du guide (2), ou inversement,
et **en ce que** le dispositif (100) s'étend principalement le long d'un axe longitudinal du dispositif coïncident, pendant le couplage avec les moyens d'obturation (90), avec l'axe d'insertion (X), et dans lequel la rainure (315) s'étend sensiblement en hélice autour de l'axe (X).

2. Dispositif (100) selon la revendication 1, dans lequel la rainure (315) s'étend en hélice jusqu'à faire au moins un tour complet autour de l'axe du dispositif.

3. Dispositif (100) selon la revendication 1 ou 2, comprenant une paire de rainures (315) et une paire de broches (215), chacune étant adaptée pour se mettre en prise avec la rainure respective (315).

4. Dispositif (100) selon la revendication 3, dans lequel les points d'entrée (61) de chaque rainure (315) sont espacés de 180° autour de l'axe du dispositif.

5. Dispositif (100) selon l'une quelconque des revendications précédentes, dans lequel les moyens de couplage (315, 215) forment au moins un verrou supplémentaire (66) entre le guide (2) et le support de sonde (3) dans une configuration de fin de course dans laquelle la tête (41) de la sonde (4) est positionnée dans le lumen du flux s'écoulant dans le canal (70) et dans lequel les moyens de couplage (315, 215) forment un verrou supplémentaire (63) entre le guide (2) et le support de sonde (3) dans une configuration d'introduction partielle du support de sonde (3) dans le guide (2) dans laquelle la tête (41) de la sonde (4) est près des moyens d'obturation de fluide (90).

6. Dispositif (100) selon l'une quelconque des revendications précédentes, dans lequel le guide (2) est doté d'un trou de drainage (201) avec silencieux (202).

7. Dispositif (100) selon l'une quelconque des revendications précédentes, dans lequel le support de sonde (3) peut être fixé à l'intérieur du guide (2) par des moyens de verrouillage de sécurité (55) tels qu'une vis spéciale qui peut être actionnée uniquement à l'aide d'une clé spéciale.

8. Dispositif (100) selon l'une quelconque des revendications précédentes, dans lequel le guide (2) est équipé d'un élément de poussée (60) adapté pour donner au support de sonde (3), inséré dans le guide (2), une poussée le long d'un axe d'insertion (X) dans une direction d'extraction du support de sonde (3), dans lequel l'élément de poussée (60) est un ressort positionné à l'intérieur du guide (2).

9. Dispositif (100) selon l'une quelconque des revendications précédentes, comprenant une sonde (4) de mesure de données à partir d'un fluide, ladite sonde (4) étant dotée d'un corps (44) pourvu d'une tête (41) contenant au moins un capteur et étant fixée à l'intérieur du corps (31) du support de sonde (3).

10. Procédé d'insertion et de positionnement d'une sonde (4) de mesure de données à partir d'un fluide à l'intérieur d'un canal (70) au moyen d'un dispositif (100) selon la revendication 9, comprenant les étapes de :
- fourniture d'un canal (70) doté de moyens d'obturation (90) du fluide dans la configuration fermée ;
- mise en prise du guide (2) sur les moyens d'obturation (90) ;
- insertion du support de sonde (3), à l'intérieur duquel est fixée la sonde (4), dans le guide (2) de façon à activer les moyens de couplage (315, 215) entre le support de sonde (3) et le guide (2) ;
- actionnement des moyens d'obturation (90) dans la configuration ouverte ;
- insertion supplémentaire du support de sonde (3) dans le guide (2) dans la direction d'insertion, de sorte que la tête (41) de la sonde est positionnée dans la lumière du fluide s'écoulant dans le canal (70) ;
- activation des moyens de couplage (215, 315) dans une configuration de verrouillage de façon à empêcher le coulissement axial du support de sonde (3) dans le guide (2).

11. Procédé selon la revendication 10, dans lequel entre l'étape d'insertion du support de sonde (3) dans le guide et l'étape d'actionnement des moyens d'obturation (90) dans la configuration ouverte, l'étape d'activation des moyens de couplage (213, 315) dans une autre configuration de verrouillage est prévue de façon à empêcher le coulissement axial du support de sonde (3) dans le guide (2) dans la direction opposée à celle d'insertion.
